Europäisches Patentamt

**European Patent Office**

Office européen des brevets

(19)

(11) Numéro de publication: **0 074 883**
**B1**

(12) **FASCICULE DE BREVET EUROPEEN**

(45) Date de publication du fascicule du brevet:
27.12.84

(51) Int. Cl.³: **F 16 H 19/06,** F 16 H 19/00

(21) Numéro de dépôt: **82401619.0**

(22) Date de dépôt: **02.09.82**

(54) **Mécanisme de translation rectiligne à poulies et courroies.**

(30) Priorité: **15.09.81 FR 8117427**

(43) Date de publication de la demande:
**23.03.83 Bulletin 83/12**

(45) Mention de la délivrance du brevet:
**27.12.84 Bulletin 84/52**

(84) Etats contractants désignés:
**DE GB IT SE**

(56) Documents cités:
**CH - A - 99 570**
**CH - A - 299 015**
**CH - A - 377 166**
**DE - B - 1 102 515**
**DE - B - 1 184 478**
**DE - C - 35 543**
**FR - A - 1 198 914**
**FR - A - 1 359 372**
**FR - A - 2 334 891**
**US - A - 2 588 642**
**US - A - 3 003 357**
**US - A - 3 267 812**
**US - A - 4 170 146**

**XEROX DISCLOSURE JOURNAL, vol. 1, no. 5, mai 1976,**
**pages 5,6; R.E. LEARNED et al.: "Cable-pulley**
**arrangement".**

(73) Titulaire: **REGIE NATIONALE DES USINES RENAULT,**
**Boîte postale 103 8-10 avenue Emlle Zola,**
**F-92109 Boulogne-Billancourt (FR)**

(72) Inventeur: **Passemard, Jean Robert, 11, rue de Magny,**
**F-77400 Bailly Romainvilliers (FR)**
Inventeur: **Keledjian, Gaston, 19, rue Jules Ferry,**
**F-92109 Boulogne Billancourt (FR)**

## Description

L'invention concerne un mécanisme destiné à transformer la rotation d'un arbre en une translation rectiligne d'un mobile par rapport à un support comportant les paliers dudit arbre, et cela en utilisant une transformation par poulies et courroies, en particulier des courroies métalliques minces (clinquant) s'enroulant sur des poulies à jante cylindrique.

Un dispositif de transformation du mouvement est prévu, utilisant deux courroies antagonistes décalées dans le sens de l'axe de l'arbre et s'enroulant sur deux poulies de même diamètre et solidaire de l'arbre, chaque courroie ayant une première extrémité fixée sur la poulie correspondante et une deuxième extrémité fixée directement ou indirectement sur le mobile, et les sens d'enroulement des deux poulies étant opposés, de telle manière que la rotation de l'arbre dans un sens ou dans l'autre conduise l'enroulement d'une courroie et le déroulement de l'autre. Un tel dispositif, correspondant au préambule de la revendication 1, est connu par exemple du brevet US-A No 3003357.

Selon les conditions d'utilisation, l'invention peut revêtir deux formes principales:

Dans le cas où la dimension du mobile dans le sens du déplacement est supérieure à la dimension correspondante du support, lesdites deuxièmes extrémités des deux courroies sont fixées sur le mobile en des points de fixation écartés à partir desquels les deux brins rectilignes de courroie convergent vers la poulie double situés dans un même plan, tangent aux deux poulies.

Dans le cas où, au contraire, la dimension du mobile dans le sens du déplacement est plus faible que la dimension correspondante du support, lesdites deuxièmes extrémités des deux courroies sont fixées sur le mobile en des points plus rapprochés à partir desquels elles vont en divergeant, l'une vers un élément de la poulie double, placée à une extrémité du support, et l'autre, qui est en position décalée, vers une poulie de renvoi placée à l'autre extrémité du support et, de là, revient par un brin de retour à l'autre élément de la poulie double.

A titre de perfectionnement, afin que chaque courroie puisse s'enrouler sur plus d'un tour sur la poulie correspondante, il est prévu, selon l'invention telle qu'elle est caractérisée dans la revendication 1, de réaliser dans cette poulie un évidement en deçà de sa périphérie cylindrique, évidement qui se raccorde par un arrondi à grand rayon avec la périphérie cylindrique dans le sens de départ de la courroie, la courroie étant fixée à l'intérieur de cet évidement, lequel est ensuite comblé par une pièce de forme qui reconstitue par-dessus la première extrémité de la courroie la surface cylindrique initiale. En particulier, la courroie, en feuille métallique mince à haute résistance, peut avantageusement être munie d'un renfort d'extrémité soudé ou collé, et la fixation assurée par un pied de centrage qui traverse des perforations en regard, à la fois dans la poulie et dans la pièce de remplissage, cette dernière étant elle-même fixée dans la poulie, par exemple au moyen de vis. Des modes particuliers de réalisation de l'invention apparaissent dans les revendications dépendantes.

A titre d'autre perfectionnement, il est prévu de placer un dispositif de compensation élastique constitué par un empilement de rondelles Belleville, disposées entre un boîtier cylindrique et une tige axiale, avec un moyen de réglage par vis micrométrique de la compression de l'empilement de rondelles, ce dispositif étant interposé entre ladite deuxième extrémité d'une des courroies et le mobile (dans le premier mode d'utilisation, avec mobile plus grand que le support) ou, au contraire, inséré dans le brin de retour de la courroie passant sur la poulie de renvoi (dans le deuxième mode d'utilisation, avec mobile plus court que le support). Dans ce dernier cas, la deuxième courroie est elle-même coupée en deux brins distincts entre lesquels est placé le dispositif de compensation en un endroit qui reste toujours compris entre la poulie double et la poulie de renvoi.

L'invention est en particulier applicable à un bras de robot à double déplacement, le premier mode d'utilisation étant employé pour le déplacement horizontal du bras dans une plaque-support, tandis que le deuxième mode d'utilisation est utilisé pour déplacer par rapport à un bâti ladite plaque-support qui constitue alors le mobile.

D'autres particularités de l'invention apparaîtront dans la description qui va suivre d'un mode de réalisation pris comme exemple qui est représenté sur le dessin annexé, sur lequel:

la fig. 1 est une vue en perspective avec arraché partiel d'un mécanisme à double déplacement utilisant les deux modes de réalisation, chacun pour un déplacement;

la fig. 2 est une coupe transversale à plus grande échelle d'un élément de la poulie double montrant la fixation de la courroie correspondante;

les fig. 3 et 4 représentent, en coupe axiale et à plus grande échelle, le détail des dispositifs de compensation élastique respectivement dans les deux modes d'utilisation.

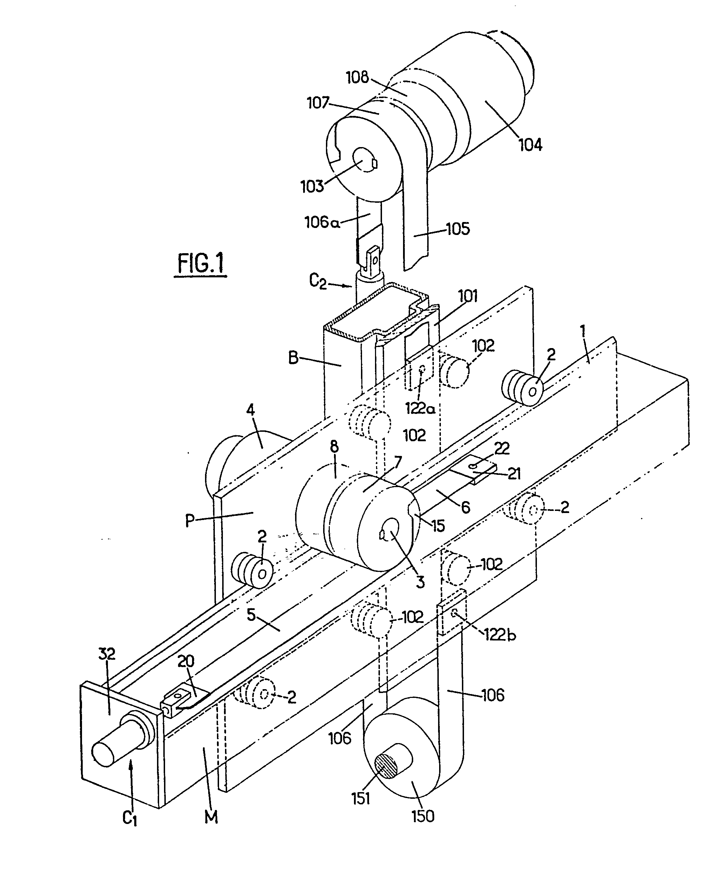

Pour comprendre le mécanisme élémentaire, on va d'abord considérer, en référence à la fig. 1, que l'on veut déplacer un mobile M par rapport à une plaque-support P que l'on suppose fixe pour l'instant. Le mobile M est monté coulissant dans la plaque P par tout moyen de coulissement rectiligne approprié, par exemple au moyen d'une glissière 1 solidaire du mobile M et comportant sur ses deux bords deux chanfreins à 45°, cette glissière étant portée par quatre galets 2 qui tourillonnent autour d'axes solidaires de la plaque P et comportent chacun une gorge en V du profil correspondant à celui de la glissière 1. Naturellement, ces galets sont positionnés avec précision et réglés pour supprimer tout jeu. On supposera par exemple, pour simplifier, que le mobile M se déplace selon l'horizontale.

Pour produire ce mouvement de translation rectiligne aller et retour du mobile M par rapport à la plaque P, on dispose d'un arbre 3 qui est entraîné en rotation par tout moyen électromécanique ou hydraulique approprié, représenté schématiquement par un servomoteur 4 à deux sens de rotation.

La transformation de ce mouvement de rotation de l'arbre 3 en un mouvement de translation du mobile M est obtenue en utilisant deux courroies 5 et 6 à action antagoniste, décalées dans le sens de l'axe de l'arbre 3 et s'enroulant sur deux poulies, respectivement 7 et 8, de même diamètre, qui peuvent par conséquent être réunies en un tambour unique.

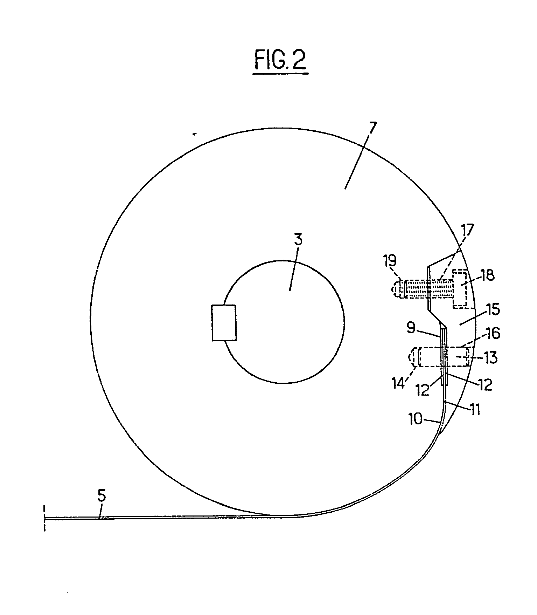

Pour avoir une course du mobile M suffisante sans imposer un diamètre trop important pour ces deux poulies ni un couple très élevé pour le servomoteur 4, autrement dit pour permettre aux courroies 5 et 6 de s'enrouler sur plus d'un tour sur les poulies respectives 7 et 8, on utilise de préférence, pour la fixation de la première extrémité de chacune de ces courroies sur la poulie 7 ou 8 correspondante, le mode de fixation représenté sur la fig. 2.

Pour cela, la poulie 7, par exemple, clavetée sur l'arbre 3, comporte à sa périphérie un évidement de la forme représentée, présentant en particulier une partie plane 9 intérieure au contour cylindrique de la poulie et qui se raccorde par un arrondi 10 à un grand rayon avec cette périphérie cylindrique pour éviter toute angulation de la courroie 5. Cette courroie 5 est constituée par une feuille métallique mince, en clinquant ou en feuillard d'acier à haute résistance de très faible épaisseur, et sa première extrémité 11, en contact avec la poulie 7, comporte de préférence un renforcement constitué par deux plaquettes 12 qui sont soudées chacune sur une des faces de cette extrémité 11. Ce renforcement vient s'appliquer sur la partie rectiligne 9 et s'y trouve fixé et positionné avec précision grâce à un pied de centrage 13 qui traverse un orifice pratiqué dans l'ensemble de l'extrémité 11 et de ses renforts 12, ainsi que dans un trou 14 pratiqué dans la poulie. En outre, conformément à l'invention, on dispose par-dessus le tout une pièce de remplissage 15 dont le contour intérieur épouse exactement le contour de l'évidement et du renfort, et dont le contour extérieur reconstitue très exactement la surface cylindrique de la poulie 7 qui avait été supprimée par cet évidement, et cela jusque dans l'arrondi 10.

Cette pièce de remplissage 15 comporte également un orifice 16 pour le passage du pied de centrage 13, ainsi qu'un autre orifice épaulé 17 permettant le passage d'une vis de fixation 18 qui se visse dans un trou taraudé 19 de la poulie. De cette manière, lors de la rotation de la poulie 7, après que la courroie 5 s'est enroulée d'un tour complet, en recouvrant la partie de remplissage 15, elle s'enroule à nouveau sur elle-même sur un rayon accru d'une quantité infime, grâce à la minceur de la courroie utilisée.

Naturellement, l'autre poulie 8 comporte une fixation semblable pour la courroie 6, mais orientée dans le sens opposé et avec un calage angulaire convenable.

La deuxième extrémité 20 de la courroie 5, ou 21 de la courroie 6, comporte de la même façon un renfort d'extrémité semblable à 12 pour permettre la fixation de ces deux extrémités sur le mobile M.

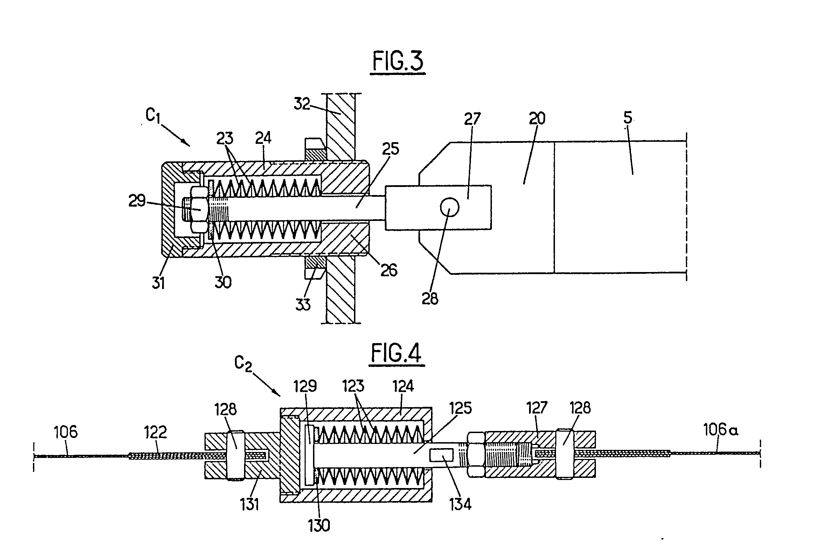

Toutefois, si l'extrémité 21 est fixée directement sur le mobile M, par exemple au moyen d'une vis 22, l'autre extrémité 20 est de préférence fixée sur le mobile M par l'intermédiaire d'un dispositif de compensation élastique $C_1$ représenté en détail sur la fig. 3. Celui-ci comporte essentiellement un ressort de compression constitué par un empilement de rondelles élastiques 23 contenues dans un boîtier cylindrique 24 et traversées par une tige de traction et de guidage 25. Cette tige 25 traverse le fond 26 du boîtier 24, et son extrémité extérieure comporte une chape 27 dans laquelle se fixe l'extrémité 20 au moyen d'une fixation traversante 28. L'autre extrémité de la tige 25 est filetée et comporte un écrou 29 qui appuie, par l'intermédiaire d'une rondelle d'appui 30, sur l'empilement élastique 23. Le boîtier 24 peut être fermé par un bouchon 31, et l'ensemble du boîtier 24, fileté extérieurement à l'aide d'un filetage fin, traverse une paroi d'extrémité 32 du mobile M, tandis qu'un écrou cranté 33 se visse sur la partie filetée en s'appuyant sur 32 et permet le réglage de la compression de l'empilement élastique 23.

Ce dispositif permet ainsi de régler avec précision la précontrainte de l'ensemble des courroies 5 et 6, étant donné en effet qu'un excès de tension risquerait de rompre ces courroies, tandis qu'une insuffisance de tension ne permettrait pas au mobile M d'exercer l'effort voulu sans introduire des jeux indésirables. Ce dispositif de compensation élastique $C_1$ est donc utile dans tous les cas, et en particulier dans le cas envisagé où l'enroulement des courroies se fait sur plus d'un tour, afin de compenser également les infimes variations du rayon d'enroulement comme exposé plus haut.

Le mode de réalisation qui vient d'être décrit pour le déplacement en translation du mobile M par rapport à la plaque P est applicable, quelle que soit l'orientation du déplacement, à tous les cas où la dimension du mobile dans le sens du déplacement est très supérieure à la dimension correspondante du support, qui dans ce cas est P. Dans ce cas, la poulie double 7-8 est disposée entre les extrémités 20 et 21, les parties rectilignes des courroies 5 et 6 sont dans un même plan, tangent à l'ensemble des deux poulies, et, à partir des points de fixation 21 et 22, les courroies vont donc en convergeant vers cette poulie double.

Il est possible toutefois d'apporter une variante de réalisation dans les cas où la longueur du mobile dans le sens du déplacement est inférieure à la longueur correspondante du support. Dans ce cas, il est préférable de placer la poulie double à une extrémité du support, une poulie de renvoi supplémentaire à l'autre extrémité, et de disposer le mobile entre ces deux extrémités.

Pour illustrer ce deuxième mode d'utilisation, on va exposer, toujours en référence à la fig. 1, l'application au déplacement vertical de la plaque P par rapport à un bâti B. Pour éviter toute équivoque, il est bon de souligner que la plaque P — qui, dans la première application, était considérée comme le support dans lequel coulisse le mobile M — constitue au contraire, dans cette deuxième application, le mobile qui coulisse verticalement par rapport au bâti B.

Pour ce qui concerne le moyen de guidage en coulissement, comme dans l'exemple précédent, il peut être constitué par une glissière 101 coopérant avec quatre galets à gorge 102 mais, compte tenu du fait que, dans ce cas, le mobile P est court et le support B plus grand dans le sens vertical, c'est de préférence la glissière 101 qui maintenant est fixe et les galets 102 mobiles avec la plaque P, alors que, dans le premier exemple, c'est la glissière 1 qui était mobile et les galets 2 en position fixe dans le sens horizontal. Les références 103 à 108 désignent des pièces identiques aux pièces 3 et 8 de l'exemple précédent, hormis la longueur des courroies qui est appropriée à la course voulue.

La différence majeure provient du fait que les deux points de fixation 122a et 122b des courroies 105 et 106 sont relativement rapprochés, puisque adaptés à la dimension verticale de la plaque P, et que, s'ils sont toujours décalés axialement dans le sens de l'axe de l'arbre 103, à partir de ces deux points de fixation, les deux courroies 105 et 106 partent en divergeant, l'une vers la poulie 107, et l'autre vers une poulie de renvoi supplémentaire 150 tourillonnant folle autour d'un arbre 151 parallèle à l'arbre 103. Les deux brins 105 et 106 de courroies sont donc toujours dans un même plan, qui cette fois est tangent à la fois à la poulie double 107 et 108 et à la poulie de renvoi 150. De cette dernière, la courroie 106 repart vers l'élément 108 de la poulie double 107-108.

Pour assurer la compensation élastique de la précontrainte des courroies, on pourrait, d'une manière classique, agir sur la poulie de renvoi 150, mais il est préférable d'adapter le dispositif de compensation élastique $C_1$ précédent pour en faire un compensateur élastique $C_2$, représenté en détail sur la fig. 4, de manière qu'il puisse se monter sur le brin de retour allant de la poulie de renvoi 150 à la poulie double 107, 108. Pour cela, ce brin de retour est donc scindé en deux portions 106 et 106a, comme représenté sur la fig. 1.

Dans ce cas, le boîtier 124 contenant les rondelles élastiques 123, au lieu de s'appuyer sur la partie fixe 32, est fixé lui-même à l'extrémité renforcée 122 de la courroie 106 par l'intermédiaire du bouchon 131 qui est en forme de chape pour permettre une fixation traversante ou axe d'attache. Pour compenser la disparition de la possibilité de réglage qui en résulte, on fixe au contraire la chape 127 d'une manière réglable à l'extrémité de la tige 125, par exemple au moyen d'un raccordement fileté et d'un contre-écrou, comme représenté. L'écrou 29 précédent est remplacé par une tête 129 qui s'appuie, toujours par l'intermédiaire d'une rondelle d'appui 130, sur l'empilement élastique 123. Pour permettre la rotation de la tige 125 nécessaire au réglage, deux plats 134 pratiqués sur la partie dépassante de cette tige permettent d'assurer son entraînement en rotation lors du réglage.

Naturellement, on prend soin de positionner le compensateur élastique $C_2$ en un point de la courroie 106-106a qui demeure toujours entre la poulie double 107-108 et la poulie de renvoi 150.

Ce deuxième mode d'application, concernant le cas où le mobile est plus court que le support, peut lui aussi s'utiliser dans toutes les directions et, dans le cas particulier que l'on vient de décrire, où il sert à déplacer verticalement tout l'ensemble de la plaque P et du mécanisme de bras horizontal M, on peut naturellement, d'une manière habituelle, compenser le poids de cet ensemble mobile au moyen d'un contrepoids non représenté.

Un tel bras à double déplacement en translation horizontale et verticale est particulièrement adapté à la réalisation de bras de robot avec déplacement cartésien, auquel cas il est particulièrement intéressant d'avoir de grandes courses et de fortes démultiplications avec des servomoteurs et des poulies peu encombrantes. Cependant, l'invention s'applique également dans tous les cas où l'on veut transformer un mouvement de rotation d'un arbre en un mouvement de translation rectiligne.

**Revendications**

1. Mécanisme d'actionnement en translation rectiligne d'un mobile coulissant par rapport à un support, du type comportant un servomoteur (4 ou 104) entraînant en rotation un arbre (3 ou 103), et un dispositif de transformation du mouvement utilisant deux courroies (5, 6 ou 105, 106) décalées dans le sens de l'axe de l'arbre (3 ou 103) et s'enroulant sur deux poulies de même diamètre (7, 8 ou 107, 108) et solidaire de l'arbre (3 ou 103), une première extrémité (11) de chacune de ces courroies étant fixée sur la poulie correspondante, tandis que la deuxième extrémité (20, 21 ou 122a, 122b) de chacune des courroies est fixée sur le mobile (M ou P), et les sens d'enroulement étant opposés de manière que chaque rotation dans un sens ou dans l'autre de l'arbre produise l'enroulement d'une des courroies et le déroulement de l'autre, caractérisé par le fait que ladite première extrémité (11) de chacune des courroies (5) est fixée sur la poulie correspondante (7) à l'intérieur d'un évidement pratiqué dans la partie cylindrique de la poulie, évidement qui comporte une partie rectiligne (9) raccordée à la partie cylindrique par un arrondi (10) de grand rayon, et qu'il est prévu une pièce de remplissage (15) recouvrant ladite extrémité (11) et remplissant ledit évidement, en étant limitée extérieurement par une surface qui reconstitue la surface cylindrique de la poulie.

2. Mécanisme selon la revendication 1, caractérisé par le fait qu'il comporte un dispositif de compensation élastique de la tension de précontrainte des courroies, dispositif ($C_1$ ou $C_2$) incluant un organe élastique, ledit organe élastique (23 ou 123) étant enfermé dans un boîtier (24 ou 124) et traversé par une tige (25 ou 125), ladite tige étant fixée par une chape (27 ou 127) à l'extrémité d'une courroie (5 ou 106a), et le boîtier étant fixé par ailleurs à une partie (32) du mobile ou d'un autre brin (106) de courroie.

3. Mécanisme selon la revendication 2, caractérisé par le fait que le dispositif de compensation élastique (C₁ ou C₂) comporte un moyen de réglage micrométrique de la compression de l'organe élastique (23 ou 123), ledit moyen de réglage étant constitué par un ensemble vis-écrou (25-29; 125-127) coaxial au boîtier (24; 124).

4. Mécanisme selon l'une des revendications 2 ou 3, applicable en particulier au cas où la longueur du mobile (M) dans le sens du déplacement considéré est supérieure à la longueur correspondante du support (P), et où ladite poulie double (7-8) est disposée entre les points de fixation desdites deuxièmes extrémités (20, 21) des courroies sur le mobile (M), caractérisé par le fait que les parties rectilignes des courroies (5 et 6) convergent vers ladite poulie double (7-8) à partir desdits points de fixation en étant situés dans un même plan, tangent à ladite poulie double, la fixation d'une desdites deuxièmes extrémités sur le mobile (M) étant effectuée par l'intermédiaire dudit dispositif de compensation élastique (C₁), le boîtier (24) dudit dispositif étant fixé dans une paroi (32) du mobile (M).

5. Mécanisme selon l'une des revendications 1 à 3, applicable plus particulièrement au cas où la longueur du mobile (P) dans le sens du déplacement considéré est inférieure à la longueur correspondante du support (B), caractérisé par le fait que le mobile (P) est disposé entre ladite poulie double (107-108) placée à une extrémité du support (B) et une poulie de renvoi supplémentaire (150) placée à l'autre extrémité dudit support, et que, à partir des points de fixation (122a, 122b) desdites courroies (105, 106) sur le mobile, les courroies vont en divergeant, pour se rendre l'une (105) à l'un des éléments (107) de la poulie double (107-108) et l'autre (106) à ladite poulie de renvoi (150) en s'étandant dans un même plan tangent aux trois poulies, tandis qu'un brin de retour de ladite autre courroie (106-106a) au deuxième élément (108) de ladite poulie double se situe dans un plan sensiblement parallèle au précédent.

6. Mécanisme selon les revendications 1 et 2 ou 1 et 3, caractérisé par le fait que ledit dispositif de compensation élastique (C₂) est interposé sur ledit brin de retour (106-106a) en un endroit qui se trouve toujours compris entre la poulie double (107-108) et la poulie de renvoi (150).

7. Mécanisme de double actionnement en coordonnées cartésiennes, caractérisé par le fait qu'il comporte en combinaison un mécanisme selon la revendication 4 et un mécanisme selon l'une des revendications 5 ou 6, le support (P) de l'un constituant le mobile de l'autre.

## Claims

1. An actuating mechanism for producing a rectilinear translatory movement of a movable member which is slidable with respect to a support, of the type comprising a servo motor (4 or 104) for driving a shaft (3 or 103) in rotation, and a device for converting the movement, using two belts (5, 6 or 105, 106) which are displaced in the direction of the axis of the shaft (3 or 103) and which are wound around two pulleys (7, 8 or 107, 108) which are of the same diameter and which are fixed with respect to the shaft (3, 103), a first end (11) of each of said belts being fixed to the corresponding pulley while the second end (20, 21, or 122a, 122b) of each of the belts is fixed to the movable member (M or P), and the directions of winding being opposite in such a way that each rotary movement in one direction or the other of the shaft causes one of the belts to be wound on and the other to be wound off, characterised in that said first end (11) of each of the belts (5) is fixed to the corresponding pulley (7) within an opening provided in the cylindrical part of the pulley, which opening comprises a rectilinear part (9) connected to the cylindrical part by a rounded portion (10) of large radius, and that there is provided a filling member (15) for covering said end (11) and filling said opening, being delimited outwardly by a surface which reconstitutes the cylindrical surface of the pulley.

2. A mechanism according to Claim 1, characterised in that it comprises a resilient compensating means for compensating for the prestressing tension of the belts, said means (C₁ or C₂) including a resilient member, said resilient member (23 or 123) being enclosed in a case (24 or 124) and having a rod (25 or 125) passing therethrough, said rod being fixed by means of a fork connection (27 or 127) to the end of a belt (5 or 106a) and the case also being fixed to a part (32) of the movable member or another belt run (106).

3. A mechanism according to Claim 2, characterised in that the resilient compensating means (C₁ or C₂) comprises a micrometer adjusting means for adjusting the compression of the resilient member (23 or 123), said adjusting means comprising a screw-nut assembly (25-29; 125-127) which is coaxial with the case (24, 124).

4. A mechanism according to one of Claims 2 or 3 applicable in particular to the situation where the length of the movable member (M) in the direction of displacement in question is greater than the corresponding length of the support (P) and said double pulley (7-8) is disposed between the fixing points of said second ends (20, 21) of the belts to the movable member (M), characterised in that the straight parts of the belts (5 and 6) converge towards said double pulley (7-8) from said fixing points, being disposed in the same plane, which is tangent to said double pulley, one of said second ends being fixed to the movable member (M) by way of said resilient compensating means (C₁), the case (24) of said means being fixed in a wall (32) of the movable member (M).

5. A mechanism according to one of Claims 1 to 3 applicable more particularly to the situation where the length of the movable member (P) in the direction of displacement in question is less than the corresponding length of the support (B), characterised in that the movable member (P) is disposed between said double pulley (107-108) which is positioned at one end of the support (B), and an additional return pulley (150) which is positioned at the other end of said support, and that from the fixing points (122a, 122b) of said belts (105, 106) to the movable member, the belts diverge such that one (105) goes to one of the elements (107) of the double pulley (107-108) and the other (106) goes to said return pulley (150), extending in the same plane which is tangent to the three pulleys, while a return run of said other belt (106-106a) to the second element (108) of said double pulley is disposed in a plane which is substantially parallel to the above-mentioned plane.

6. A mechanism according to Claims 1 and 2 or 1 and 3, characterised in that said resilient compensating means (C₂) is interposed on said return run (106-106a) at a location which is always between the double pulley (107-108) and the return pulley (150).

7. A mechanism for double actuation in respect of cartesian co-ordinates, characterised in that it comprises in combination a mechanism according to Claim 4 and a mechanism according to Claim 5 or 6, the support (P) of one forming the movable member of the other.

## Patentansprüche

1. Betätigungsvorrichtung zur Übertragung geradliniger Bewegungen eines bezüglich einer Halterung gleitenden, beweglichen Teils, mit einem Servomotor (4 oder 104), der eine Welle (3 oder 103) in Drehung versetzt, und mit einer Bewegungsumsetzungseinrichtung, die zwei Treibriemen (5, 6 oder 105, 106) verwendet, welche in Richtung der Welle (3 oder 103) versetzt zueinander sind und zwei Riemenscheiben (7, 8 oder 107, 108) gleichen Durchmessers umschlingen, welche mit der Welle (3 oder 103) fest verbunden sind, wobei ein erstes Ende (11) eines jeden Treibriemens an der zugehörigen Riemenscheibe befestigt ist, während das zweite Ende (20, 21 oder 122a, 122b) eines jeden Treibriemens am beweglichen Teil (M oder P) befestigt ist und die Aufwikkelrichtungen derart entgegengesetzt sind, dass jede Drehung der Welle in einer oder der anderen Richtung einen der Treibriemen aufwickelt und den anderen abwickelt, dadurch gekennzeichnet, dass das genannte erste Ende (11) eines jeden Treibriemens (5) an der zugehörigen Riemenscheibe (7) im Inneren einer Aussparung befestigt ist, die im zylindrischen Bereich der Riemenscheibe vorgesehen ist, wobei die Aussparung einen geradlinigen Bereich (9) aufweist, der mit dem zylindrischen Bereich über eine Abrundung (10) mit grossem Radius verbunden ist, und dass ein Füllteil (15) vorgesehen ist, das das genannte Ende (11) bedeckt und die genannte Aussparung ausfüllt, wobei es aussen von einer Oberfläche begrenzt ist, die die zylindrische Oberfläche der Riemenscheibe ersetzt.

2. Vorrichtung nach Anspruch 1, dadurch gekennzeichnet, dass sie eine elastische Kompensationsanordnung für die Vorspannung der Treibriemen aufweist, wobei diese Anordnung (C₁ oder C₂) ein elastisches Teil enthält und das elastische Teil (23 oder 123) in einem Gehäuse (24 oder 124) eingeschlossen ist und von einem Bolzen (25 oder 125) durchsetzt wird, wobei der Bolzen mittels einer Haube (27 oder 127) am Ende eines Treibriemens (5 oder 106a) befestigt ist und das Gehäuse ferner an einem Bereich (32) des beweglichen Teils oder eines anderen Riementrumms (106) befestigt ist.

3. Vorrichtung nach Anspruch 2, dadurch gekennzeichnet, dass die elastische Kompensationsanordnung (C₁ oder C₂) eine Mikrometerregelanordnung für die Spannung des elastischen Teils (23 oder 123) aufweist, wobei die Regelanordnung aus einer Einheit Schraube-Mutter (25-29; 125-127) gebildet ist, die koaxial zum Gehäuse (24; 124) ist.

4. Vorrichtung nach einem der Ansprüche 2 oder 3, insbesondere anwendbar für den Fall, bei dem die Länge des beweglichen Teils (M) in Richtung der betrachteten Verschiebung grösser ist als die entsprechende Länge der Halterung (P) und in dem die genannte doppelte Riemenscheibe (7-8) zwischen den Befestigungspunkten der genannten zweiten Enden (20, 21) der Treibriemen am beweglichen Teil (M) angeordnet ist, dadurch gekennzeichnet, dass die geradlinigen Bereiche der Treibriemen (5 und 6) zur genannten doppelten Riemenscheibe (7-8) konvergieren, ausgehend von den genannten Befestigungspunkten, wobei sie in einer gleichen Ebene angeordnet sind, die tangential zur genannten doppelten Riemenscheibe ist, und dass die Befestigung eines der genannten zweiten Enden am beweglichen Teil (M) mittels der genannten elastischen Kompensationsanordnung (C₁) erfolgt, und dass das Gehäuse (24) der genannten Anordnung in einer Wand (32) des beweglichen Teils (M) befestigt ist.

5. Vorrichtung nach einem der Ansprüche 1 bis 3, insbesondere anwendbar für den Fall, bei dem die Länge des beweglichen Teils (P) in Richtung der betrachteten Verschiebung kleiner ist als die entsprechende Länge der Halterung (B), dadurch gekennzeichnet, dass das bewegliche Teil (P) zwischen der genannten doppelten Riemenscheibe (107-108), die an einem Ende der Halterung (B) vorgesehen ist, und einer zusätzlichen Umkehrriemenscheibe (150) angeordnet ist, die am anderen Ende der Halterung vorgesehen ist, und dass ausgehend von den Befestigungspunkten (122a, 122b) der genannten Treibriemen (105, 106) am beweglichen Teil die Treibriemen divergierend verlaufen, wobei einer (105) zu einem der Elemente (107) der doppelten Riemenscheibe (107-108) verläuft und der andere (106) zur genannten Umkehrrimenscheibe (150) verläuft, unter Erstreckung in einer gleichen, zu den drei Riemenscheiben tangentialen Ebene, während sich ein Umkehrtrumm des genannten anderen Treibriemens (106-106a) zum zweiten Element (108) der genannten doppelten Riemenscheibe in einer Ebene erstreckt, die im wesentlichen parallel zur vorhergehenden ist.

6. Vorrichtung nach den Ansprüchen 1 und 2 oder 1 und 3, dadurch gekennzeichnet, dass die elastische Kompensationsanordnung (C₂) zwischen dem genannten Umkehrtrumm (106-106a) und einer Stelle angeordnet ist, die immer zwischen der doppelten Riemenscheibe (107-108) und der Umkehrriemenscheibe (150) eingeschlossen ist.

7. Vorrichtung zur doppelten Betätigung in kartesischen Koordinaten, dadurch gekennzeichnet, dass sie eine Kombination einer Vorrichtung nach Anspruch 4 mit einer Vorrichtung nach einem der Ansprüche 5 oder 6 aufweist, wobei die Halterung (P) der einen das bewegliche Teil der anderen bildet.

FIG.1

## FIG.2

FIG.3

FIG.4

0 074 883

13